# EUROPEAN PATENT SPECIFICATION

(11) **EP 2 269 537 B1**
(45) Date of publication and mention of the grant of the patent: **21.11.2018**
(21) Application number: 10250843.9
(22) Date of filing: 27.04.2010
(51) Int. Cl.: A61C 7/28, A61C 7/30

(54) **Orthodontic bracket having a lingually biased closure member**
Orthodontische Spange mit einem lingual vorgespannten Verschlusselement
Bracket orthodontique doté d'une attache maintenue élastiquement par une force bucco-linguale

(30) Priority: 07.05.2009 US 176307 P
(43) Date of publication of application: 05.01.2011
(73) Proprietor: Ormco Corporation, Orange, CA 92867 (US)
(72) Inventor: Oda, Todd I., Torrance, CA 90504 (US)
(74) Representative: Findlay, Alice Rosemary

(56) References cited:
- EP-A1- 1 836 990
- EP-A2- 1 508 310
- EP-A2- 1 679 048
- WO-A1-2009/015157
- US-A- 4 492 573
- US-A- 4 547 153
- US-A- 4 846 681
- US-A- 5 094 614
- US-A- 5 322 435
- US-A- 5 466 151
- US-A- 5 613 850
- US-A- 5 857 849
- US-A- 5 908 293
- US-A1- 2007 248 928

## Description

The invention relates generally to orthodontic brackets and, more particularly, to self-ligating orthodontic brackets having movable closure members

Orthodontic brackets represent a principal component of all corrective orthodontic treatments devoted to improving a patient's occlusion. In conventional orthodontic treatments, an orthodontist or an assistant affixes brackets to the patient's teeth and engages an archwire into a slot of each bracket. The archwire applies corrective forces that coerce the teeth to move into correct positions. Traditional ligatures, such as small elastomeric O-rings or fine metal wires, are employed to retain the archwire within each bracket slot. Due to difficulties encountered in applying an individual ligature to each bracket, self-ligating orthodontic brackets have been developed that eliminate the need for ligatures by relying on a movable portion or member, such as a latch or slide, for retaining the archwire within the bracket slot.

While such self-ligating brackets are generally successful in achieving their intended purpose, there remain some drawbacks. By way of example, in some instances controlling the rotation of the teeth, such as near the finishing stages of orthodontic treatment, can be problematic. While there may be several factors that cause a reduction in rotational control, it is believed that one of the major causes is the loose fit of the archwire within the archwire slot of the bracket when the movable member is closed. When the movable member is closed, the bracket body and the movable member collectively form a closed lumen for capturing the archwire. A close fit between the lumen and the archwire is believed to be important for achieving excellent rotational control during orthodontic treatment.

The close fit between the archwire and the archwire slot when the movable member is closed may be affected by several factors including, for example, the tolerances of the manufacturing process used to form the bracket body and the movable member. When the orthodontic bracket is assembled, the various tolerances may "stack up" so as to provide a relatively loose fit between the archwire and the closed lumen provided by the bracket body and movable member. As noted above, such a loose fit is believed to result in a diminished capacity to control the rotation of the teeth. By way of example, there may be a first tolerance variation in the depth of the archwire slot formed in the bracket body itself (e.g., 0.028" +0.001/-0.000). There may also be a second tolerance variation in the thickness of the movable member (e.g., 0.012" +0.000/-0.001). In addition, to allow the movable member to move relative to the bracket body between the open and closed positions, there must be some clearance therebetween. Thus, the track or window in the bracket body which receives the movable member provides a third tolerance variation (e.g., 0.0125" +0.0015/-0.000). The tolerances stack up to provide a lumen which may significantly vary in its labial-lingual dimension (e.g., 0.0285" to 0.032" based on the above dimensions and tolerances) and therefore provide a relatively loose fit with the archwire.

Another drawback observed in the implementation of self-ligating orthodontic brackets is directed to moving the movable member to the closed position with a partially seated archwire. In this regard, when the archwire does not fully seat within the archwire slot, but instead slightly projects from the opening thereof when the movable member is in the open position, it may be difficult to move the movable member to the closed position. This problem is exacerbated when the tolerance stack ups are at a minimum and there is very little play between the movable member and the bracket body. It may then be necessary to couple the archwire to the bracket using alternative means, such as ligatures or elastics, at least until the archwire seats within the archwire slot. Such alternative methods are inconvenient and time consuming.

Thus, while self-ligating brackets have been generally successful, manufacturers of such brackets continually strive to improve their use and functionality.

US 2007/0248928 discloses an orthodontic bracket which includes a base member defining an archwire slot having an opening, and at least one projection extending outwardly from the base member; a ligating slide moveable between a first position which is clear of the archwire slot, and second position where the ligating slide projects over the opening of the archwire slot; and a biasing member borne by the ligating slide, and resiliently cooperating with the projection and wherein the biasing member has a first portion which receives the projection when the ligating slide is in the first position, and a second portion which receives the projection when the ligating slide is in the second position.

EP 1679048 discloses an orthondontic bracket without a bracket body configured to be mounted to a tooth which includes an archwire slot having a base surface defining a base plane and a slide engagement track defining a translation plane. The translation plane is angled with respect to the base plane. A ligating slide is engaged with the slide engagement track of the bracket body and movable along the slide engagement track and parallel to the translation plane between an opened position, in which an archwire is insertable into the archwire slot, and a closed position, in which the archwire is retained within the archwire slot. The translation plane is angled with respect to the base plane so as to prevent the ligating slide from contacting the gingiva surrounding the tooth when the ligating slide is moved to the
US 5 466 151 discloses an orthodontic bracket defining an archwire slote and comprising a ligating slide that slides between an open and a closed position of said archwire slot. A resilient flat spring is mounted within a recess of the bracket body, the spring having a protruding section. The surface of the ligating slide that closes the archwire slot includes an indentation sized and positioned to receive the protruding section of the spring, the ligating slide being releasably maintained in one of the open and closed positions by engagement of the protruding section of the spring within the indentation.

An orthodontic bracket for coupling an archwire with a tooth in accordance with the invention comprises a bracket body configured to be mounted to the tooth, the bracket body including an archwire slot configured to receive the archwire therein and having a base surface with a pair of opposed slot surfaces projecting therefore that define the archwire slot, a ligating slide engaged with the bracket body and slidable relative thereto between an opened position in which the archwire is insertable into the archwire slot, and a closed position in which the ligating slide opposes the base surface to retain the archwire in the archwire slot, and a biasing member coupled to the bracket body and being configured to engage at least a
portion of the ligating slide when the ligating slide is in at least the closed position, wherein the biasing member is configured to impose a force on the ligating slide when the ligating slide is in at least the closed position that biases the ligating slide toward the base surface of the archwire slot, characterised in that the biasing member is configured to prevent the ligating slide from separating from the bracket body when the ligating slide is in at least the opened position.

Preferably, the biasing member is a resilient member.

In an exemplary embodiment, the movable member includes a ligating slide. However, other movable members, such as a latch, clip, door, etc. are also possible. The resilient member may include various flexible
members capable of imposing a biasing force on the movable member when in contact therewith. In one embodiment, for example, the resilient member may include a spring pin capable of generally radially flexing relative to its central axis. The bracket body includes a window defining a support surface, the window configured to receive the movable member and guide the movable member during movement between its opened and closed positions. The bracket body further includes a opening, such as a groove, that communicates with the window of the bracket body. In this way, when the resilient member is disposed in the groove, the resilient member engages the movable member and biases the movable member into engagement with the support surface of the slide window. A gap may be defined between the movable member and the window that allows the movable member to be moved or shifted away from the base surface of the archwire slot and against the bias of the resilient member. The ability to shift the movable member may allow the bracket to accommodate partially seated archwires.

In addition to biasing the movable member toward the base surface of the archwire slot, the resilient member may be configured to cooperate with the movable member to secure the movable member in at least the closed position. In this regard, the movable member may include a retaining slot that operates in conjunction with the resilient member to secure the movable member in at least the closed position. In one embodiment, for example, the retaining slot may include a recessed portion and a raised portion adjacent the recessed portion. The retaining slot may include a second recessed portion adjacent the raised portion configured to secure the movable member in the opened position. In addition to securing the movable member in the closed position, and possibly the opened position as well, the resilient member/retaining slot configuration may further prevent the movable member from becoming detached or separated from the bracket body.

A method of moving a tooth to affect orthodontic treatment using an orthodontic bracket is disclosed which includes inserting an archwire into an archwire slot in the orthodontic bracket, wherein the archwire slot is defined at least in part by a base surface. The movable member is then closed so as to capture the archwire within the archwire slot of the bracket. A force is imposed on the movable member that biases the movable member toward the base surface of the archwire slot at least when the movable member is in a closed position. The biasing force may be imposed using a resilient member configured so as to push the movable member toward the base surface of the archwire slot. The method may further include using the resilient member to secure the movable member in at least the closed position.

A method for ligating a partially seated archwire within an archwire slot, which is defined at least in part by a base surface, is disclosed which includes moving a movable member in a direction away from the base surface of the archwire slot. The movable member is then moved to a closed position to capture the partially seated archwire between the base surface and the movable member. A force is imposed on the movable member that biases the movable member toward the base surface of the arcwire slot at least when the movable member is in a closed position. This biasing force is then used to urge the archwire into a fully seated position within the archwire slot. In one embodiment, the movement of the movable member away from the base surface is against the imposed biasing force.

The invention at least in the preferred embodiments provides self-ligating orthodontic brackets that provide improved rotational control during orthodontic treatment, such as during the finishing stages thereof, and that accommodate partially seated archwires.

The invention will now be further described by way of example with reference to the accompanying drawings, in which:
Fig. 1 is a perspective view of an orthodontic bracket according to one embodiment of the invention, the movable member shown in the opened position;
Fig. 2 is a perspective view of the orthodontic bracket shown in Fig. 1 with the movable member shown in the closed position;
Fig. 3 is a perspective view similar to Fig. 1, but with elements removed for clarity purposes;
Fig. 4 is a perspective view of the resilient member shown in Figs. 1 and 2;
Fig. 5 is a perspective view of the movable member shown in Figs. 1 and 2;
Fig. 6 is a cross-sectional elevation view of the orthodontic bracket shown in Fig. 2 generally taken along the line 6-6;
Fig. 7 is a cross-sectional elevation view of the orthodontic bracket shown in Fig. 1 generally taken along the line 7-7;
Fig. 8 is a perspective view of an orthodontic bracket in accordance with another embodiment of the invention;
Fig. 9 is a side elevation view of the orthodontic bracket shown in Fig. 8 with the movable member shown in the closed position;
Fig. 10 is a side elevation view of the orthodontic bracket shown in Fig. 8 with the movable member shown in an intermediate position;
Fig. 11 is a side elevation view of the orthodontic bracket shown in Fig. 8 with the movable member shown in the opened position;
Fig. 12 is a cross-sectional elevation view of an orthodontic bracket in accordance with another embodiment of the invention with the movable member shown in the closed position;
Fig. 13 is a cross-sectional elevation view of the orthodontic bracket shown in Fig. 12 with the movable member shown in an intermediate position;
Fig. 14 is a cross-sectional elevation view of the orthodontic bracket shown in Fig. 12 with the movable member shown in the opened position;
Fig. 15 is a cross-sectional elevation view of an orthodontic bracket in accordance with another embodiment of the invention with the movable member shown in the closed position;
Fig. 16 is a cross-sectional elevation view of the orthodontic bracket shown in Fig. 15 with the movable member shown in an intermediate position;
Fig. 17 is a cross-sectional elevation view of the orthodontic bracket shown in Fig. 15 with the movable member shown in the opened position; and
Fig. 18 is a cross-sectional elevation view similar to Fig. 6, illustrating operation of the bracket with a partially seated archwire.

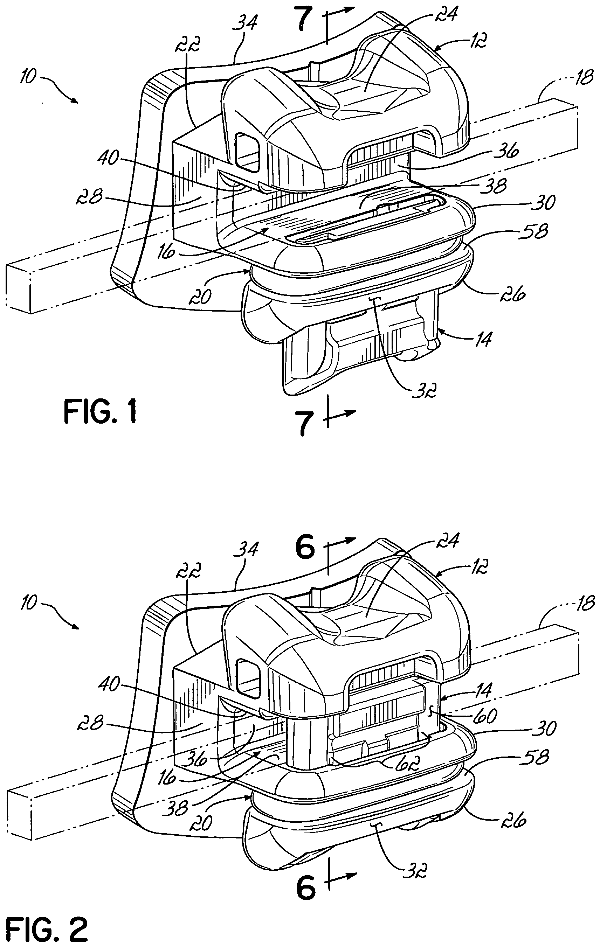

Referring now to the drawings, and to Figs. 1 and 2 in particular, an orthodontic bracket 10 includes a bracket body 12 and a movable closure member coupled to the bracket body 12. In one embodiment, the movable closure member may include a ligating slide 14 slidably coupled with the bracket body 12. The bracket body 12 includes an archwire slot 16 formed therein configured to receive an archwire 18 (shown in phantom) for applying corrective forces to the teeth. The ligating slide 14 is movable between an opened position (Fig. 1) in which the archwire 18 is insertable into the archwire slot 16, and a closed position (Fig. 2) in which the archwire 18 is retained within the archwire slot 16. The bracket body 12 and ligating slide 14 collectively form an orthodontic bracket 10 for use in corrective orthodontic treatments.

While the movable closure member is described herein as a ligating slide, the movable closure member may include other movable structures (e.g., latch, spring clip, door, etc.) that are capable of moving between an opened and closed position. In addition to the above, the orthodontic bracket 10 further includes a multi-function biasing member coupled to the bracket body 12 and configured to engage at least a portion of the ligating slide 14. As explained in more detail below, the biasing member, which in one embodiment includes a resilient member 20, provides a force for biasing the ligating slide 14 toward the base of the archwire slot 16. Moreover, resilient member 20 may further provide a securing mechanism for securing the ligating slide 14 to the bracket body 12. In one embodiment, for example, the resilient member 20 may include a spring. While the biasing member is described herein as a resilient member (e.g., spring), other biasing members may be used

The orthodontic bracket 10, unless otherwise indicated, is described herein using a reference frame attached to a labial surface of a tooth on the lower jaw. Consequently, as used herein, terms such as labial, lingual, mesial, distal, occlusal, and gingival used to describe bracket 10 are relative to the chosen reference frame. The embodiments, however, are not limited to the chosen reference frame and descriptive terms, as the orthodontic bracket 10 may be used on other teeth and in other orientations within the oral cavity. For example, the bracket 10 may also be coupled to the lingual surface of the tooth. Those of ordinary skill in the art will recognize that the descriptive terms used herein may not directly apply when there is a change in reference frame. Nevertheless, embodiments of the bracket are intended to be independent of location and orientation within the oral cavity and the relative terms used to describe embodiments of the orthodontic bracket are to merely provide a clear description of the embodiments in the drawings. As such, the relative terms labial, lingual, mesial, distal, occlusal, and gingival are in no way limiting to a particular location or orientation.

When mounted to the labial surface of a tooth carried on the patient's lower jaw, the bracket body 12 has a lingual side 22, an occlusal side 24, a gingival side 26, a mesial side 28, a distal side 30 and a labial side 32. The lingual side 22 of the bracket body 12 is configured to be secured to the tooth in any conventional manner, such as for example, by an appropriate orthodontic cement or adhesive or by a band around an adjacent tooth. The lingual side 22 may further be provided with a pad 34 defining a bonding base that is secured to the surface of the tooth. The pad 34 may be coupled to the bracket body 12 as a separate piece or element, or alternatively, the pad 34 may be integrally formed with the bracket body 12.

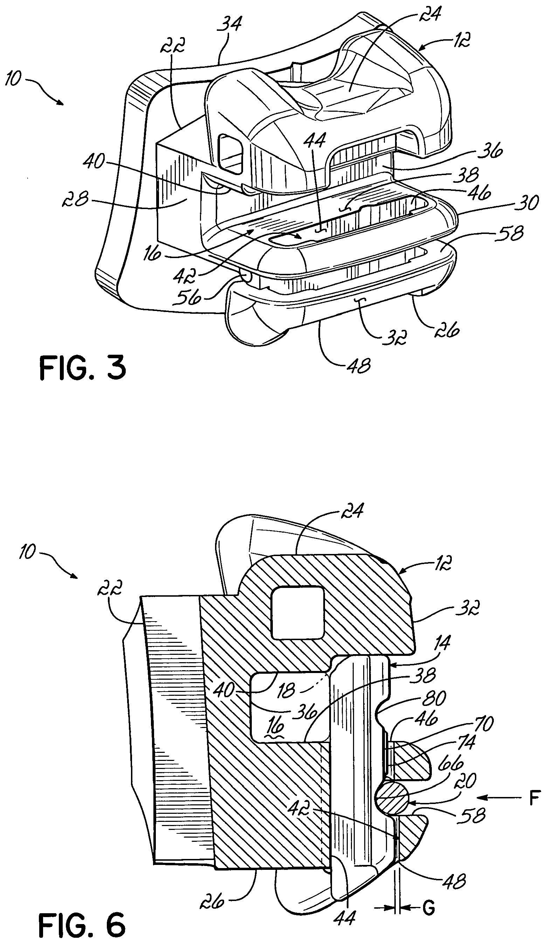

The bracket body 12 includes a base surface 36 and a pair of opposed slot surfaces 38, 40 projecting labially from the base surface 36 that collectively define the archwire slot 16, which may extend in a mesial-distal direction from mesial side 28 to distal side 30. The base surface 36 and slot surfaces 38, 40 are substantially encapsulated or embedded within the material of the bracket body 12. As shown in Fig. 3, the bracket body 12 further includes a slide window 42 configured to receive the ligating slide 14 therein. The slide window 42 defines a generally planar support surface 44 configured to engage at least a portion of the ligating slide 14 and further configured to position the ligating slide 14 relative to the base surface 36 of the archwire slot 16. The support surface 44 is positioned gingivally of the archwire slot 16 and extends in a generally occlusal-gingival direction. Additionally, the slide window 42 includes a first opening 46 formed in the slot surface 38 to allow the ligating slide 14 to move to the closed position and cover the archwire slot 16 and retain the archwire 18 therein. A second opening 48 is formed opposite the first opening 46 and allows the ligating slide 14 to move to the opened position. The slide window 42, and more particularly, support surface 44 effectively forms a track for supporting and guiding ligating slide 14 within bracket body 12 as the ligating slide 14 moves between opened and closed positions.

As shown in Figs. 1 and 2, orthodontic bracket 10 includes a resilient member 20 for biasing the ligating slide 14 toward the base surface 36 of the archwire slot 16. More particularly, resilient member 20 is configured to bias the ligating slide 14 into engagement with support surface 44 of slide window 42. Such a biasing of the ligating slide 14 provides some benefits to the orthodontic treatment of teeth. As discussed in the background section, in some cases conventional self-ligating brackets may have a tolerance stack up that provides a variation in the depth of the archwire slot in a generally labial-lingual direction. By biasing the ligating slide 14 toward and into engagement with support surface 44, a number of the tolerance stack up variables may no longer be relevant in determining the depth of the archwire slot 16, thereby making the position of the ligating slide 14 relative to the base surface 36 more certain.

By way of example, because the ligating slide 14 is biased by resilient member 20 toward the base surface 36 of the archwire slot 16, the tolerance variations in the thickness of the ligating slide 14, and the tolerance variations in the clearance between the ligating slide 14 and slide window 42 are no longer relevant in setting the depth of the archwire slot 16 in the generally labial-lingual direction. This is because no matter the magnitude of those tolerance variations, the ligating slide 14 will always be engaged against the support surface 44. Thus, the tolerance variation that must still be considered and monitored during manufacturing is the tolerance in the positioning of the support surface 44 relative to the base surface 36 of the archwire slot 16. Reducing the number of tolerances that stack up to ultimately determine the depth of the archwire slot 16 in the generally labial-lingual direction provides a tighter fit between the lumen, created by the bracket body 12 and ligating slide 14, and the archwire 18. Thus, it is believed that rotational control of the teeth may be maintained during orthodontic treatment.

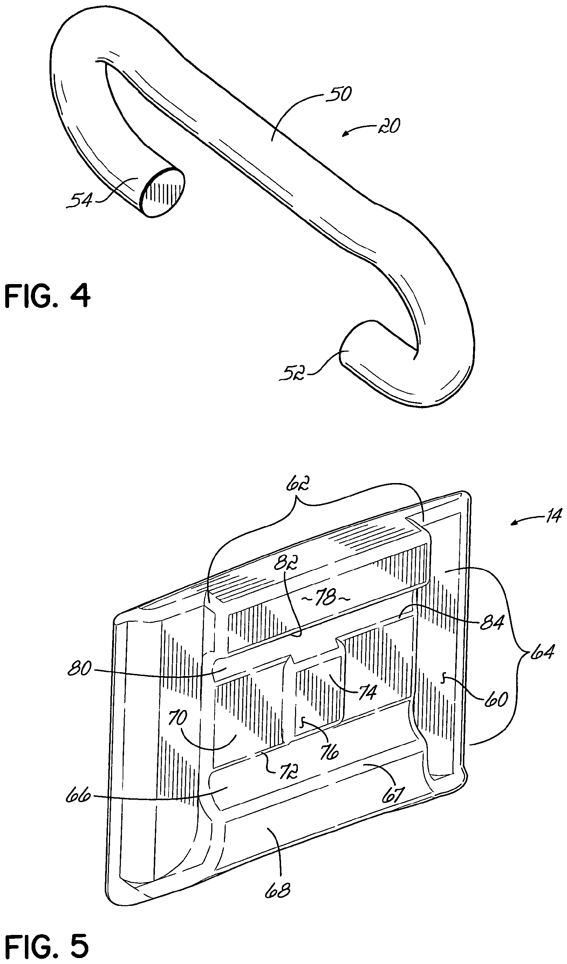

In one embodiment, and as illustrated in Fig. 4, the resilient member 20 may be generally circular in cross section and include a generally mesially-distally extending central portion 50 configured to engage at least a portion of ligating slide 14. Coupled to each end of central portion 50 are opposed J-shaped end portions 52, 54. As best illustrated in Figs. 1 and 2, resilient member 20 is configured to be coupled to orthodontic bracket 10 and engage at least a portion of the ligating slide 14 so as to bias ligating slide 14 toward the base surface 36 of archwire slot 16 and into engagement with support surface 44. In this regard, and as shown in Fig. 3, orthodontic bracket 10 may include a pair of bores 56 (one shown) in mesial and distal sides 28, 30 configured to receive the J-shaped end portions 52, 54 of resilient member 20. Additionally, to provide engagement between the resilient member 20 and the ligating slide 14, bracket body 12 may include an opening, such as a groove 58, formed in the outer surface of bracket body 12, at least a portion of which communicates with slide window 42. For example, in one embodiment, the groove 58 communicates with slide window 42 along the mesial side 28, distal side 30, and labial side 32. In alternative embodiments, the groove 58 may communicate with slide window 42 along fewer sides of the bracket body 12, such as only along the labial side 32 thereof. In any event, the communication between the groove 58 and slide window 42 allows engagement between the resilient member 20 and ligating slide 14. Those of ordinary skill in the art may recognize other openings that allow resilient member 20 to engage at least a portion of ligating slide 14.

In operation, and as illustrated in Fig. 6, when the resilient member 20 is coupled to the bracket body 12 and the ligating slide 14 is in the closed position, the resilient member 20 imposes a force F on the ligating slide 14 in a generally lingual direction and toward the base surface 36 of the archwire slot 16. Accordingly, the lingual surface of the ligating slide 14 will engage and be pressed against the support surface 44 of the slide window 42. Thus, the depth of the archwire slot 16 in the generally labial-lingual direction is determined by the position of the support surface 44 relative to the base surface 36 of the archwire slot 16. Moreover, in an exemplary embodiment, the tolerance variation in this positioning (i.e., between base surface 36 and support surface 44) may be an important factor in ensuring a close, snug fit between the archwire slot lumen, formed by the bracket body 12 and ligating slide 14, and the archwire 18. Due to the biasing of the ligating slide 14 against support surface 44 other tolerance variations (e.g., thickness of slide, clearance provided in slide window) may no longer have a bearing on the close fit between the archwire slot lumen and the archwire 18.

In addition to providing a ligually-directed force on the ligating slide 14, the resilient member 20 may be configured to perform additional functions regarding operation of the orthodontic bracket. More particularly, resilient member 20 may operate as part of a securing mechanism that secures the ligating slide 14 in at least the closed position. In one embodiment, the resilient member 20 and ligating slide 14 may cooperate in a manner that secures the ligating slide 14 in at least the closed position. In this regard, and as shown in Fig. 5, ligating slide 14 includes a labial side 60 having a central engagement portion 62 configured to engage the resilient member 20. Engagement portion 62 includes a retaining slot 64 formed therein which extends generally in the gingival-occlusal direction due to the general gingival-occlusal movement of the ligating slide 14. In one embodiment, retaining slot 64 includes a first recessed portion 66 adjacent a gingival end 67 of the retaining slot 64.

The first recessed portion 66 may have a shape that is complementary to the shape of the resilient member 20. Thus, in one embodiment, the first recessed portion 66 may be generally arcuate so as to receive the generally cylindrical resilient member 20 therein. Other complementary shapes are also possible The first recessed portion 66 is bounded gingivally by bounding wall 68. The bounding wall 68 has a sufficient height such that when resilient member 20 is seated in first recessed portion 66, occlusal movement of the ligating slide 14 relative to the bracket body 12 may be effectively prevented (further occlusal movement may also be effectively prevented by other means as well). First recessed portion 66 is bounded occlusally by raised portion 70 that defines a protrusion 72 at the transition therebetween.

When the ligating slide 14 and resilient member 20 are coupled to the bracket body 12, the resilient member 20, and more specifically, the central portion 50 thereof is received in retaining slot 64, which moves relative to the resilient member 20 as the ligating slide 14 is moved between the opened and closed positions. In one aspect of the invention, the resilient member/retaining slot securing mechanism provides for securing the ligating slide 14 in at least the closed position. To this end, the resilient member 20 is capable of flexing in a generally labial-lingual direction. Thus, in operation, when the ligating slide 14 is in the closed position (Fig. 2 and Fig. 6), the resilient member 20 is disposed in the first recessed portion 66 of retaining slot 64. When disposed in the first recessed portion 66, the protrusion 72 provides a threshold level of resistance to any movement of the ligating slide 14 away from the closed position and toward the opened position. However, if a sufficiently large opening force is applied to the ligating slide 14 in, for example, the gingival direction, the interaction between the retaining slot 64 and resilient member 20 causes the resilient member 20 to flex to an expanded configuration or position. More particularly, the resilient member 20 flexes in the generally labial direction so that the resilient member 20 moves past the protrusion 72 to engage raised portion 70 of retaining slot 64.

Once positioned along raised portion 70 (not shown), the resilient member 20 bears against the outer surface thereof such that a threshold sliding force, which may be less than, and perhaps significantly less than the opening force, must be imposed to overcome the drag and move the ligating slide 14 relative to the bracket body 12 as the resilient member 20 traverses raised portion 70. Thus, once opened, the ligating slide 14 does not just freely slide or drop to the fully opened position, but must be purposefully moved toward the opened position. If the ligating slide 14 is only partially opened, the slide 14 may be configured to maintain its position relative to the bracket body 12 (due to the friction forces) until the threshold sliding force is imposed to continue moving the slide 14 toward the opened position. Such a configuration reduces the likelihood of unintentionally closing the slide 14 during, for example, an orthodontic treatment. When the ligating slide 14 is moved toward the closed position, the resilient member 20 flexes back or snaps back to a more contracted configuration or position as the resilient member 20 enters the first recessed portion 66 to once again secure the ligating slide 14 in the closed position.

The amount of force required to overcome the threshold opening force and/or the threshold sliding force as the resilient member 20 moves away from first recessed portion 66 and engages raised portion 70 may be selectively varied. In this regard, the height of the raised portion 70 may be selected to provide a desired opening force and/or sliding force. In one embodiment, the entire raised portion 70 may be at the selected height (not shown). In an alternative embodiment, however, raised portion 70 may include a ridge or tab 74 that increases or further increases the height of raised portion 70. Moreover, the labial surface 76 of tab 74 may be generally planar to provide a relatively constant sliding force when the resilient member 20 engages tab 74. Alternatively, the labial surface 76 may be contoured to provide a variable sliding force, such as by increasing or decreasing the sliding force as the ligating slide 14 is moved toward the opened position (not shown). The above-described methods for varying the sliding force are exemplary and those of ordinary skill in the art may recognize other ways to vary the sliding force of the ligating slide 14 as the slide is moved between the opened and closed positions.

The retaining slot 64, as described above, includes first recessed portion 66 adjacent the gingival end 67 of retaining slot 64 that operates to secure the ligating slide 14 in the closed position. In one embodiment (not shown), an occlusal end of the retaining slot 64 may not include such a recessed portion 66, but instead terminate in a second bounding wall 78 adjacent raised portion 70. In an alternative embodiment, however, and as shown in Fig. 5, retaining slot 64 may include a second recessed portion 80 (similar to first recessed portion 66) adjacent the occlusal end 82 of retaining slot 64. The second recessed portion 80 is bounded occlusally by bounding wall 78. The bounding wall 78 has a sufficient height such that when resilient member 20 is seated in the second recessed portion 80, gingival movement of the ligating slide 14 relative to the bracket body 12 is effectively prevented. Similar to above, second recessed portion 80 is bounded gingivally by raised portion 70 that defines a protrusion 84 at the transition therebetween. In this way, the ligating slide 14 may be secured in both the closed and opened positions so as to require a sufficiently high opening or closing force to initiate movement of the ligating slide 14 away from the closed or opened positions, respectively.

Similar to that described above, when the ligating slide 14 is in the closed position, the resilient member 20 is disposed in the first recessed portion 66 and a sufficiently large opening force must be applied to the ligating slide 14 in the gingival direction to flex the resilient member 20 to an expanded position and allow the resilient member 20 to move past the protrusion 72 and engage raised portion 70. As the ligating slide 14 is moved further toward the opened position, the resilient member 20 snaps back to a contracted position as the resilient member 20 enters the second recessed portion 80 adjacent the occlusal end 82 of the retaining slot 64. When so disposed in second recessed portion 80, the protrusion 84 provides a threshold level of resistance to any movement of the ligating slide 14 away from the opened position and toward the closed position. Only after a sufficiently large closing force is applied to the ligating slide 14 in, for example, the occlusal direction, will the resilient member 20 flex so that resilient member 20 moves past the protrusion 84 and engage raised portion 70. Such a configuration may further prevent or reduce the likelihood of inadvertently closing the ligating slide 14 during treatment, such as when changing the archwires.

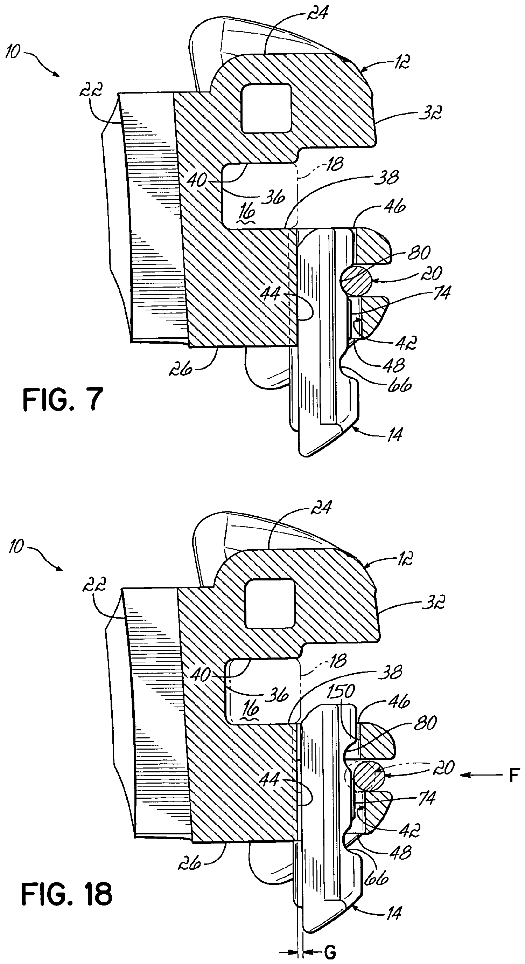

In addition to sufficiently securing the ligating slide 14 in at least the closed position (and possibly in the opened and closed position), the resilient member/retaining slot securing mechanism may also prevent or reduce accidental or unintentional detachment of the ligating slide 14 from the bracket body 12 during use, such as when the ligating slide 14 is in the opened position (Fig. 7). To this end, the length of the retaining slot 64 may limit the gingival-occlusal travel of ligating slide 14 relative to the bracket body 12. For example, the resilient member 20 may abut the occlusal end 82 (e.g., bounding wall 78) of the retaining slot 64 when the ligating slide 14 is in the fully opened position (Fig. 7). Because the occlusal end 82 closes the retaining slot 64, further movement of the ligating slide 14 in a gingival direction relative to bracket body 12 may be effectively prohibited, and ligating slide 14 cannot become separated or detached from bracket body 12.

Similarly, in the fully closed position of the ligating slide 14, the resilient member 20 is positioned in the recessed portion 66 at the gingival end 67 of the retaining slot 64, which may effectively prohibit further movement of the ligating slide 14 in the occlusal direction relative to the bracket body 12 (Fig. 6). The orthodontic bracket 10 may include other features that, in lieu of or in addition to the resilient member/retaining slot securing mechanism, prevent movement of the ligating slide 14 in the occlusal direction relative to the bracket body 12. Accordingly, the securing mechanism may operate for the dual function of securing the ligating slide 14 in the closed position (and possibly the opened position as well) and for retaining the ligating slide 14 with the bracket body 12. Such a dual-functioning securing mechanism may provide certain benefits not heretofore observed in brackets that utilize separate mechanisms for each of these functions.

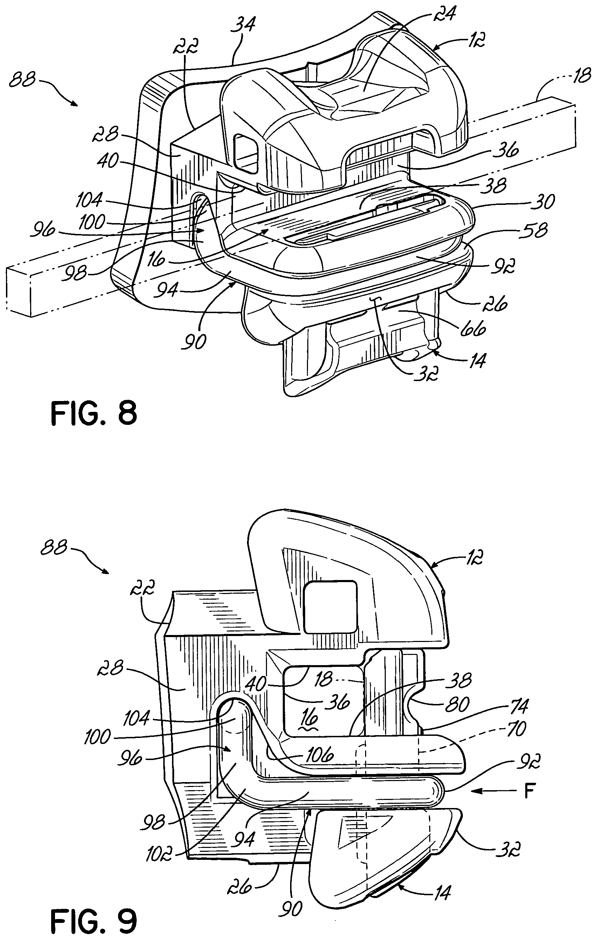

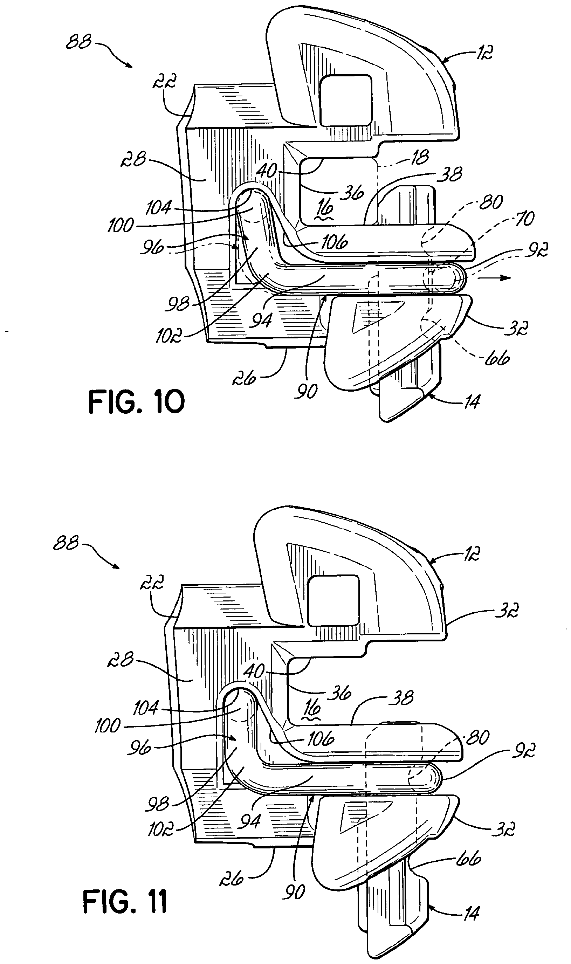

Figs. 8-11, in which like reference numerals refer to like features in Figs. 1-7, illustrate an alternative embodiment. As shown in these figures, an orthodontic bracket 88 includes a resilient member 90 having a slightly different configuration as compared to resilient member 20 shown in Fig. 4. In this regard, resilient member 90 may be generally circular in cross section and include a generally mesially-distally extending central portion 92 configured to engage at least a portion of the ligating slide 14. Coupled to each end of central portion 92 are generally labially-lingually extending arms 94 (one shown). Each of the arms 94 terminates in L-shaped end portions 96 (one shown) having a first leg 98 extending in a generally gingival-occlusal direction and a second leg 100 extending in a generally mesial-distal direction.

The first leg 98 of end portions 96 couples to arms 94 at elbows 102. The second leg 100 of end portions 96 are configured to be received in bores 104 (one shown) in mesial and distal sides 28, 30 of orthodontic bracket 88. As compared to the previous embodiment, the bores 104 are located lingually of the base surface 36 of the archwire slot 16. The bores 104 are also positioned more occlusally relative to bores 56. In this regard, the bracket body 12 may include a cutout 106 to accommodate resilient member 90 adjacent end portions 96.

In operation, resilient member 90 functions in substantially the same manner as resilient member 20 described above. In this regard, resilient member 90 applies a biasing force F on the ligating slide 14 toward the base surface 36 of the archwire slot 16 when the ligating slide 14 is in at least the closed position. Resilient member 90 also cooperates with the retaining slot 64 on the ligating slide 14 to secure the slide in at least the closed position, and preferably in both the opened and closed positions. The resilient member 90 further provides a mechanism that prevents the ligating slide 14 from separating from the bracket body 12, as was also discussed in the previous embodiment. One difference, however, is in the flexing point of the resilient members 20, 90. In this regard, in the previous embodiment, the flexing point on spring member 20 is approximately at the junction of the central portion 50 and the J-shaped end portions 52, 54. In this embodiment, the flexing point on resilient member 90 is approximately at the elbows 102 between the arms 94 and the end portions 96.

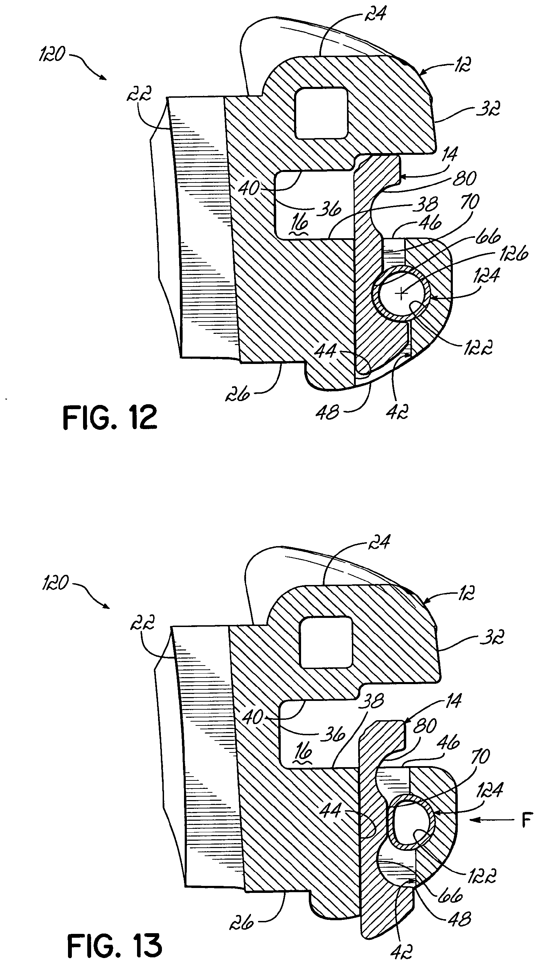

Figs. 12-17, in which like reference numerals refer to like features in Figs. 1-7, illustrate other embodiments. As shown in these figures, the resilient member may be configured as a spring pin that is configured to engage at least a portion of the ligating slide. In reference to Figs. 12-14, an orthodontic bracket 120 includes a bracket body 12 having a bore 122 extending in a generally mesial-distal direction. At least one end of bore 122 is open to the mesial or distal sides 28, 30 of the bracket body 12. Bore 122 has at least a portion in communication with the slide window 42 formed in the bracket body 12 and is configured to receive a spring pin 124 therein. In one exemplary embodiment, the spring pin 124 may be configured as a generally elongated cylindrical, tubular member defining a central axis 126 and be formed from materials including stainless steel, titanium alloys, NiTi-type superelastic materials, or other suitable materials. During assembly, the spring pin 124 may be press fit or slip fit into bore 122, and/or may be secured thereto to prevent relative movement therebetween using various processes including staking, tack welding, laser welding, adhesives, or other suitable methods.

In one aspect in accordance with this embodiment, the spring pin 124 is capable of being generally radially flexed or elastically deformed relative to its central axis 126. As used herein, radially flexed includes not only uniform radial changes, but also includes non-uniform or partial radial changes, such as that which occurs during squeezing of a resilient C-clip. In other words, at least a portion of spring pin 124 has a first effective cross dimension, diameter or radius of curvature (such as in an unbiased state) but is capable of being flexed, such as by squeezing the spring pin 124, so as to have a second effective cross dimension, diameter or radius of curvature smaller than the first effective diameter or radius of curvature. Thus, the spring pin 124 is capable of generally radially expanding and contracting depending on the force being imposed thereon.

The spring pin 124 is configured to cooperate with retaining slot 64 formed on ligating slide 14 in a manner similar to that described above. Thus, in operation, when the ligating slide 14 is in the closed position (Fig. 12), the spring pin 124 is disposed in the first recessed portion 66 of retaining slot 64. When so disposed, the spring pin 124 is in an expanded position, but is still capable of imposing a biasing force F on the ligating slide 14 in a direction toward the base surface 36 of the archwire slot 16. Moreover, when disposed in the first recessed portion 66, the protrusion 72 provides a threshold level of resistance to any movement of the ligating slide 14 away from the closed position and toward the opened position. However, if a sufficiently large opening force is applied to the ligating slide 14 in, for example, the gingival direction, the interaction between the retaining slot 64 and spring pin 124 causes the pin 124 to generally radially contract (due to the squeezing imposed by the slot 64) so that the spring pin 124 moves past the protrusion 72 to engage the raised portion 70 of the retaining slot 64 (Fig. 13).

The spring pin 124 engages the raised portion 70 such that a threshold sliding force, which may be less than, and perhaps significantly less than the opening force, must be imposed to overcome the drag and move the ligating slide 14 relative to the bracket body 12 as spring pin 124 traverses raised portion 70. Thus, once opened, the ligating slide 14 does not just freely slide or drop to the fully opened position, but must be purposefully moved toward the opened position. If the ligating slide 14 is only partially opened, the slide 14 may be configured to maintain its position relative to the bracket body 12 (due to the friction forces) until the threshold sliding force is imposed to continue moving the slide 14 toward the opened position. Such a configuration reduces the likelihood of unintentionally closing the ligating slide during, for example, an orthodontic treatment. When the ligating slide 14 is moved toward the closed position, the spring pin 124 recovers or snaps back to its radially expanded position as the spring pin 124 enters the first recessed portion 66 to once again secure the ligating slide 14 in the closed position.

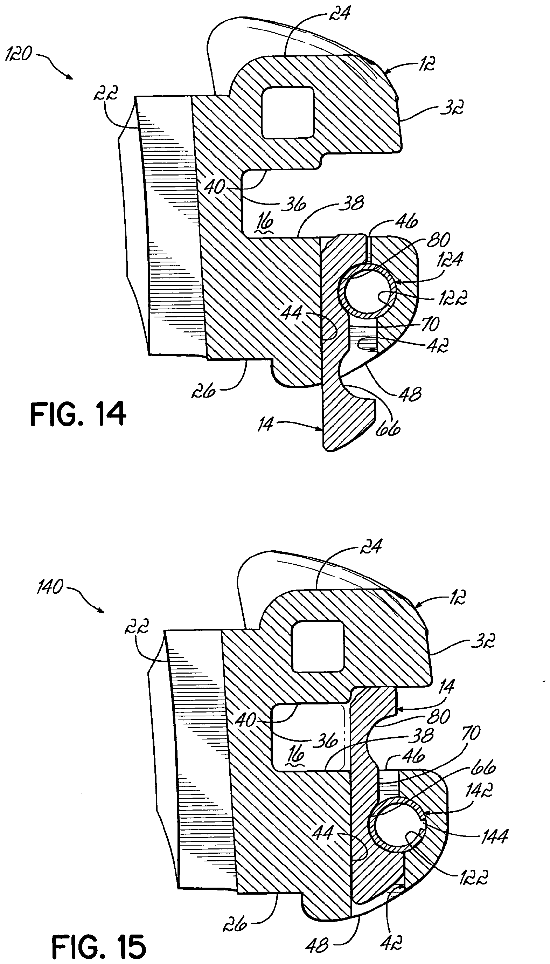

If retaining slot 64 includes second recessed portion 80, then as the ligating slide 14 is moved further toward the opened position (e.g., see Fig. 13), the spring pin 124 snaps back to its generally radially expanded position as the spring pin 124 enters the second recessed portion 80 at the occlusal end 82 of the retaining slot 64 (Fig. 14). When so disposed in the second recessed portion 80, the protrusion 84 provides a threshold level of resistance to any movement of the ligating slide 14 away from the opened position and toward the closed position. Only after a sufficiently large closing force is applied to the ligating slide 14 in, for example, the occlusal direction, will the spring pin 124 generally radially contract so that spring pin 124 moves past the protrusion 84 and engage raised portion 70.

In addition to sufficiently securing the ligating slide 14 in at least the closed position (and possibly in the opened and closed position), the spring pin/retaining slot securing mechanism may also prevent or reduce accidental or unintentional detachment of the ligating slide 14 from the bracket body 12 during use, such as when the ligating slide 14 is in the opened position (Fig. 14). To this end, the length of the retaining slot 64 may limit the gingival-occlusal travel of ligating slide 14 relative to the bracket body 12. For example, as shown in Fig. 14, the spring pin 124 may abut the occlusal end 82 (e.g., bounding wall 78) of the retaining slot 64 when the ligating slide 14 is in the fully opened position. Because the occlusal end 82 closes the retaining slot 64, further movement of the ligating slide 14 in a gingival direction relative to bracket body 12 may be prohibited, and ligating slide 14 cannot become separated or detached from bracket body 12.

Similarly, in the fully closed position of the ligating slide 14 as shown in Fig. 12, the spring pin 124 is positioned in the first recessed portion 66 at the gingival end 67 of the retaining slot 64, which may prohibit further movement of the ligating slide 14 in the occlusal direction relative to the bracket body 12. The orthodontic bracket 10 may include other features that, in lieu of or in addition to the spring pin/retaining slot securing mechanism, prevent movement of the ligating slide 14 in the occlusal direction relative to the bracket body 12. Accordingly, the securing mechanism may operate for the dual function of securing the ligating slide 14 in the closed position (and possibly the opened position as well) and for retaining the ligating slide 14 with the bracket body 12.

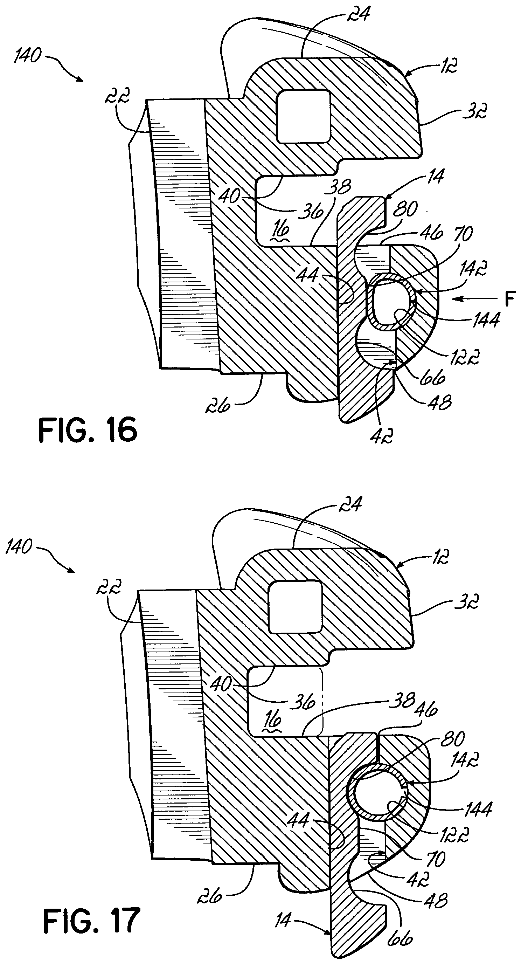

Figs. 15-17, in which like reference numerals refer to like features in Figs. 1-7 and Figs. 12-14, illustrate yet another embodiment. The embodiment shown in Figs. 15-17 is structurally and operationally similar to the embodiment shown in Figs. 12-14. In this regard, a detailed discussion of the orthodontic bracket and its operation will be omitted and only the modifications will be discussed in detail. To this end, the primary modification is to the spring pin. As shown in Figs. 15-17, instead of the spring pin having a substantially continuous circumference, orthodontic bracket 140 includes spring pin 142 having a cutout or slit 144 formed in the sidewall thereof that extends along at least a portion of the length of the spring pin 142. For example, the slit 144 may extend for substantially the full length of the spring pin 142. Alternatively, the slit 144 may extend for only a portion of the length of the spring pin 142. Further, there may be a plurality of spaced apart slits (e.g., similar to perforations) that extend for at least a portion of the length of the spring pin. The slit 144 in spring pin 142 provides a C-clip type of configuration to spring pin 142 wherein the gap of the slit narrows as the spring pin 142 is being compressed and the gap widens as the spring pin 142 is being expanded. As noted above, the term radially flexed or flexes encompasses the squeezing of the spring pin 142 between the contracted and expanded positions. The spring pin 142 may allow general radial flexing due to the slit 144 (e.g., the C-clip type of deformation) alone, or spring pin 142 may allow radial flexing due to the slit 144 in combination with the ability of the pin body to elastically deform (as is the type shown in Figs. 12-15). Such a dual mode of radial flexing is shown in the embodiment in Figs. 15-17 (e.g., see Fig. 16).

In addition to the above, orthodontic bracket 10 (as well as the orthodontic brackets shown in the other embodiments) may include several other features that provide benefits to the design of the orthodontic bracket and/or to the implementation of the bracket during orthodontic treatment. By way of example, during orthodontic treatment, such as during initial installation or change-out of the archwire, it is not uncommon for the archwire to slightly protrude from the archwire slot of the brackets. Thus, in order to close the ligating slide on the brackets, the orthodontist has to push the archwire into the archwire slot, such as with a separate tool using one hand, and then close the ligating slide using the other hand. Such a process may become burdensome or cumbersome, especially when repeated for many of the brackets in the oral cavity. Moreover, in difficult cases, other means may have to be sought for securing the archwire to the bracket, at least until the archwire can be fully seated in the archwire slot of the bracket.

Aspects in accordance with embodiments shown and described herein may prove beneficial to address such a scenario. More particularly, and as illustrated in Fig. 18, the slide window 42 may be sized larger than the ligating slide 14 so as to provide a relatively loose fit therebetween and defined by a gap G (see Fig. 6). As shown in Fig. 6, when the archwire 18 is fully seated within the archwire slot 16, the gap G is not problematic due to the biasing of the ligating slide 14 against support surface 44 using resilient member 20. Thus, during normal operating conditions, the gap G does not diminish rotational control during orthodontic treatment. However, when the archwire 18 is only partially seated in the archwire slot 16, the gap G may be used in an advantageous manner.

In this regard, and as illustrated in Fig. 18, the gap G allows the ligating slide 14 to be slightly shifted in the labial direction and against the bias of resilient member 20. For example, instead of the ligating slide 14 engaging the support surface 44 of slide window 42, the ligating slide 14 may engage the lingually-facing surface 150 opposite support surface 44, as shown in Fig. 18. Those of ordinary skill in the art will recognize that, depending on the extent of the partial seating of the archwire 18, the ligating slide 14 may be spaced from support surface 44 but not engage lingually-facing surface 150. Thus, if the archwire 18 does not protrude from the archwire slot 16 by a significant amount (that amount being determined by the magnitude of the gap G), the ligating slide 14 may still be moved to the closed position. Over time, the bias imposed on the ligating slide 14 by resilient member 20 will urge the archwire 18 into its fully seated position and orthodontic treatment may proceed under its normal course.

While the present invention has been illustrated by a description of various preferred embodiments and while these embodiments have been described in some detail, additional advantages and modifications will readily appear to those skilled in the art. By way of example, while the embodiments described herein show the resilient member pushing the ligating slide toward the base surface of the archwire slot, the resilient members may be configured to pull the ligating slide toward the base surface of the archwire slot. In this regard, the resilient members disclosed herein act on the labial surface of the ligating slide to bias the slide toward the base surface of the archwire slot. However, a resilient member may act on the lingual surface of the ligating slide to effectively pull the slide toward the base surface of the archwire slot.

## Claims

1. An orthodontic bracket for coupling an archwire with a tooth, comprising a bracket body (12) configured to be mounted to the tooth, the bracket body (12) including an archwire slot (16) configured to receive the archwire (18) therein and having a base surface (36) with a pair of opposed slot surfaces (38) projecting therefrom that define the archwire slot, a ligating slide (14) engaged with the bracket body (12) and slidable relative thereto between an opened position in which the archwire (18) is insertable into the archwire slot (16), and a closed position in which the ligating slide (14) opposes the base surface (36) to retain the archwire (18) in the archwire slot (16), and a biasing member (20, 90, 124, 142) coupled to the bracket body (12) and being configured to engage at least a portion of the ligating slide (14) when the ligating slide (14) is in at least the closed position, wherein the biasing member (20, 90, 124, 142) is configured to impose a force on the ligating slide (14) when the ligating slide (14) is in at least the closed position that biases the ligating slide (14) toward the base surface (36) of the archwire slot (16), **characterised in that** the biasing member (20, 90, 124, 142) is configured to prevent the ligating slide (14) from separating from the bracket body (12) when the ligating slide (14) is in at least the opened position

2. The orthodontic bracket of claim 1, wherein the biasing member is a resilient member (20, 90, 124, 142).

3. The orthodontic bracket of claim 2, wherein the resilient member (20, 90, 124, 142) is capable of flexing between a contracted position and an expanded position.

4. The orthodontic bracket of either claim 2 or claim 3, wherein the resilient member includes a spring pin (124, 142).

5. The orthodontic bracket of claim 4, wherein the spring pin (142) includes a slit (144) that extends for at least a portion of the length of the spring pin.

6. The orthodontic bracket of either claim 4 or claim 5, wherein the spring pin (124, 142) is capable of flexing between a contracted position and an expanded position.

7. The orthodontic bracket of claim 6, wherein the spring pin (124, 142) flexes in a generally radial direction between the contracted and expanded positions.

8. The orthodontic bracket of any one of claims 2 to 7, wherein the bracket body (12) includes a window (40) configured to receive the ligating slide (14) therein, the window (42) defining a support surface (44), wherein the resilient member (20, 90, 124, 142) biases the ligating slide (14) into engagement with the support surface (44) when the ligating slide (14) is at least in the closed position.

9. The orthodontic bracket of claim 8, wherein the bracket body includes a groove (58) formed therein, at least a portion of the groove (58) in communication with the window (42), at least a portion of the resilient member (20, 90) configured to be disposed in the groove (58) so as to engage the ligating slide (14).

10. The orthodontic bracket of either claim 8 or claim 9, wherein a gap is defined between the ligating slide (14) and the window (42) in the bracket body, the gap allowing the ligating slide (14) to move away from the base surface (36) of the archwire slot (16) against the bias of the resilient member (20, 90, 124, 142) so as to accommodate partially seated archwires.

11. The orthodontic bracket of any one of claims 2 to 10, wherein the resilient member (20, 90, 124, 142) is configured to impose a force on the ligating slide (14) that biases the ligating slide (14) toward the base surface (36) of the archwire slot (16) when the ligating slide (14) is in the opened position.

12. The orthodontic bracket of any one of claims 2 to 10, wherein the resilient member (20, 90, 124, 142) is further configured to secure the ligating slide (14) in at least the closed position.

13. The orthodontic bracket of claim 12, wherein the ligating slide includes a retaining slot (64) configured to cooperate with the resilient member (20, 90, 124, 142) to secure the ligating slide (14) in at least the closed position.

14. The orthodontic bracket of claim 13, wherein the retaining slot (64) comprises a first recessed portion (66), a first bounding wall (68) adjacent the first recessed portion (66) that defines a first end of the retaining slot, and a raised portion (70) adjacent the first recessed portion opposite the first bounding wall (68), a protrusion (72) being defined between the first recessed portion (66) and the raised portion (70), wherein the resilient member (20, 90, 124, 142) is engaged with the first recessed portion (66) when the ligating slide (14) is in the closed position.

15. The orthodontic bracket of claim 14, wherein the retaining slot (64) further comprises a second recessed portion (80) spaced from the first recessed portion (66), and a second bounding wall (78) adjacent the second recessed portion (80) that defines a second end of the retaining slot, wherein the raised portion (70) is also adjacent the second recessed portion (80) opposite the second bounding wall (78), a protrusion (84) being defined between the second recessed portion (80) and the raised portion (70), and wherein the resilient member (20, 90, 124, 142) is engaged with the second recessed portion (80) when the ligating slide (14) is in the opened position.

## Patentansprüche

1. Eine orthodontische Spange zum Koppeln eines Bogendrahts mit einem Zahn, umfassend einen Spangenkörper (12), der zur Befestigung am Zahn konfiguriert ist, wobei der Spangenkörper (12) einen Bogendrahtschlitz (16) beinhaltet, der zur Aufnahme des Bogendrahts (18) darin konfiguriert ist, und eine Grundfläche (36) mit einem daraus hervorspringenden Paar gegenüberliegender Schlitzoberflächen (38) aufweist, die den Bogendrahtschlitz definieren, einen ligierenden Schieber (14), der in den Spangenkörper (12) greift und relativ dazu verschiebbar ist zwischen einer geöffneten Position, in welcher der Bogendraht (18) in den Bogendrahtschlitz (16) einschiebbar ist, und einer geschlossenen Position, in welcher der ligierende Schieber (14) gegen die Grundfläche (36) arbeitet, um den Bogendraht (18) in dem Bogendrahtschlitz (16) festzuhalten, und ein Vorspannelement (20, 90, 124, 142), das an den Spangenkörper (12) gekoppelt ist und so konfiguriert ist, dass es mindestens einen Teil des ligierenden Schiebers (14) feststellt, wenn sich der ligierende Schieber (14) in mindestens der geschlossenen Position befindet, wobei das Vorspannelement (20, 90, 124, 142) so konfiguriert ist, dass eine Kraft auf den ligierenden Schieber (14) ausgeübt wird, wenn sich der ligierende Schieber (14) in mindestens der geschlossenen Position befindet, die den ligierenden Schieber (14) gegen die Grundfläche (36) des Bogendrahtschlitzes (16) vorspannt, **dadurch gekennzeichnet, dass** das Vorspannelement (20, 90, 124, 142) so konfiguriert ist, dass eine Abtrennung des ligierenden Schiebers (14) vom Spangenkörper (12) verhindert wird, wenn sich der ligierende Schieber (14) in mindestens der geöffneten Position befindet.

2. Die orthodontische Spange nach Anspruch 1, wobei das Vorspannelement ein elastisches Element (20, 90, 124, 142) ist.

3. Die orthodontische Spange nach Anspruch 2, wobei sich das elastische Element (20, 90, 124, 142) zwischen einer kontrahierten Position und einer expandierten Position biegen kann.

4. Die orthodontische Spange nach entweder Anspruch 2 oder Anspruch 3, wobei das elastische Element einen Federstift (124, 142) beinhaltet.

5. Die orthodontische Spange nach Anspruch 4, wobei der Federstift (142) einen Spalt (144) beinhaltet, der sich über mindestens einen Teil der Federstiftlänge erstreckt.

6. Die orthodontische Spange nach entweder Anspruch 4 oder Anspruch 5, wobei sich der Federstift (124, 142) zwischen einer kontrahierten Position und einer expandierten Position biegen kann.

7. Die orthodontische Spange nach Anspruch 6, wobei sich der Federstift (124, 142) in einer hauptsächlich radialen Richtung zwischen den kontrahierten und expandierten Positionen biegt.

8. Die orthodontische Spange nach einem der Ansprüche 2 bis 7, wobei der Spangenkörper (12) ein Fenster (40) beinhaltet, das zur Aufnahme des ligierenden Schiebers (14) darin konfiguriert ist, wobei das Fenster (42) eine Auflagefläche (44) definiert, wobei das elastische Element (20, 90, 124, 142) den ligierenden Schieber (14) zum Eingriff in die Auflagefläche (44) vorspannt, wenn sich der ligierende Schieber (14) mindestens in der geschlossenen Position befindet.

9. Die orthodontische Spange nach Anspruch 8, wobei der Spangenkörper eine darin gebildete Kerbe (58) beinhaltet, mindestens ein Teil der Kerbe (58) in Kommunikation mit dem Fenster (42), mindestens ein Teil des elastischen Elements (20, 90) so konfiguriert, dass es so in der Kerbe (58) angeordnet ist, dass der ligierende Schieber (14) eingreift.

10. Die orthodontische Spange nach entweder Anspruch 8 oder Anspruch 9, wobei eine Lücke zwischen dem ligierenden Schieber (14) und dem Fenster (42) in dem Spangenkörper definiert ist, wobei die Lücke dem ligierenden Schieber (14) ermöglicht, sich so von der Grundfläche (36) des Bogendrahtschlitzes (16) gegen die Vorspannung des elastischen Elements (20, 90, 124, 142) wegzubewegen, dass teilweise platzierte Bogendrähte untergebracht werden.

11. Die orthodontische Spange nach einem der Ansprüche 2 bis 10, wobei das elastische Element (20, 90, 124, 142) so konfiguriert ist, dass eine Kraft auf den ligierenden Schieber (14) ausgeübt wird, die den ligierenden Schieber (14) gegen die Grundfläche (36) des Bogendrahtschlitzes (16) vorspannt, wenn sich der ligierende Schieber (14) in der geöffneten Position befindet.

12. Die orthodontische Spange nach einem der Ansprüche 2 bis 10, wobei das elastische Element (20, 90, 124, 142) weiterhin so konfiguriert ist, dass der ligierende Schieber (14) in mindestens der geschlossenen Position festgestellt wird.

13. Die orthodontische Spange nach Anspruch 12, wobei der ligierende Schieber einen Halteschlitz (64) beinhaltet, der so zur Zusammenarbeit mit dem elastischen Element (20, 90, 124, 142) konfiguriert ist, dass der ligierende Schieber (14) in mindestens der geschlossenen Position festgestellt wird.

14. Die orthodontische Spange nach Anspruch 13, wobei der Halteschlitz (64) einen ersten eingelassenen Teil (66), eine an den ersten eingelassenen Teil (66) angrenzende erste Begrenzungswand (68), die ein erstes Ende des Halteschlitzes definiert, und einen vorstehenden Teil (70), der an den ersten eingelassenen Teil gegenüber der ersten Begrenzungswand (68) angrenzt, umfasst, wobei ein Vorsprung (72) zwischen dem ersten eingelassenen Teil (66) und dem vorstehenden Teil (70) definiert ist, wobei das elastische Element (20, 90, 124, 142) in den ersten eingelassenen Teil (66) eingreift, wenn sich der ligierende Schieber (14) in der geschlossenen Position befindet.

15. Die orthodontische Spange nach Anspruch 14, wobei der Halteschlitz (64) weiterhin einen zweiten eingelassenen Teil (80), der im Abstand von dem ersten eingelassenen Teil (66) angeordnet ist, und eine an den zweiten eingelassenen Teil (80) angrenzende zweite Begrenzungswand (78), die ein zweites Ende des Halteschlitzes definiert, wobei der vorstehende Teil (70) auch an den zweiten eingelassenen Teil (80) gegenüber der zweiten Begrenzungswand (78) angrenzt, umfasst, wobei ein Vorsprung (84) zwischen dem zweiten eingelassenen Teil (80) und dem vorstehenden Teil (70) definiert ist, und wobei das elastische Element (20, 90, 124, 142) in den zweiten eingelassenen Teil (80) eingreift, wenn sich der ligierende Schieber (14) in der geöffneten Position befindet.

## Revendications

1. Boîtier orthodontique pour coupler un arc métallique avec une dent, comprenant un corps de boîtier (12) configuré pour être monté sur la dent, le corps de boîtier (12) comprenant une fente d'arc métallique (16) configurée pour recevoir l'arc métallique (18) en son sein et ayant une surface de base (36) avec une paire de surfaces de fentes opposées (38) faisant saillie depuis celle-ci, lesquelles définissent la fente d'arc métallique, un coulisseau de ligature (14) étant en prise avec le corps de boîtier (12) et pouvant coulisser par rapport à celui-ci entre une position ouverte, dans laquelle l'arc métallique (18) peut être inséré dans la fente d'arc métallique (16), et une position fermée, dans laquelle le coulisseau de ligature (14) s'oppose à la surface de base (36) pour retenir l'arc métallique (18) dans la fente d'arc métallique (16), et un élément de sollicitation (20, 90, 124, 142) couplé au corps de boîtier (12) et étant configuré pour venir en prise avec au moins une partie du coulisseau de ligature (14) lorsque le coulisseau de ligature (14) se trouve dans au moins la position fermée, où l'élément de sollicitation (20, 90, 124, 142) est configuré pour imposer une force sur le coulisseau de ligature (14) lorsque le coulisseau de ligature (14) se trouve dans au moins la position fermée qui sollicite le coulisseau de ligature (14) en direction de la surface de base (36) de la fente d'arc métallique (16), **caractérisé en ce que** l'élément de sollicitation (20, 90, 124, 142) est configuré pour empêcher le coulisseau de ligature (14) de se séparer du corps de boîtier (12) lorsque le coulisseau de ligature (14) se trouve dans au moins la position ouverte.

2. Boîtier orthodontique selon la revendication 1, où l'élément de sollicitation est un élément élastique (20, 90, 124, 142).

3. Boîtier orthodontique selon la revendication 2, où l'élément élastique (20, 90, 124, 142) est capable de fléchir entre une position contractée et une position déployée.

4. Boîtier orthodontique selon soit la revendication 2, soit la revendication 3, où l'élément élastique comprend une goupille à ressort (124, 142).

5. Boîtier orthodontique selon la revendication 4, où la goupille à ressort (142) comprend une fente (144) qui s'étend sur au moins une partie de la longueur de la goupille à ressort.

6. Boîtier orthodontique selon soit la revendication 4, soit la revendication 5, où la goupille à ressort (124, 142) est capable de fléchir entre une position contractée et une position déployée.

7. Boîtier orthodontique selon la revendication 6, où la goupille à ressort (124, 142) fléchit dans une direction généralement radiale entre les positions contractée et déployée.

8. Boîtier orthodontique selon l'une quelconque des revendications 2 à 7, où le corps de boîtier (12) comprend une fenêtre (40) configurée pour recevoir le coulisseau de ligature (14) en son sein, la fenêtre (42) définissant une surface d'appui (44), où l'élément élastique (20, 90, 124, 142) sollicite le coulisseau de ligature (14) à venir en prise avec la surface d'appui (44) lorsque le coulisseau de ligature (14) est dans au moins la position fermée.

9. Boîtier orthodontique selon la revendication 8, où le corps du boîtier comprend une rainure (58) formée en son sein, au moins une partie de la rainure (58) étant en communication avec la fenêtre (42), au moins une partie de l'élément élastique (20, 90) étant configurée pour être disposée dans la rainure (58) de manière à venir en prise avec le coulisseau de ligature (14).

10. Boîtier orthodontique selon soit la revendication 8, soit la revendication 9, où un écart est défini entre le coulisseau de ligature (14) et la fenêtre (42) dans le corps de boîtier, l'écart permettant au coulisseau de ligature (14) de s'éloigner de la surface de base (36) de la fente d'arc métallique (16) à l'encontre de la sollicitation de l'élément élastique (20, 90, 124, 142), de manière à recevoir des arcs métalliques partiellement installés.

11. Boîtier orthodontique selon l'une quelconque des revendications 2 à 10, où l'élément élastique (20, 90, 124, 142) est configuré pour imposer une force sur le coulisseau de ligature (14) qui sollicite le coulisseau de ligature (14) en direction de la surface de base (36) de la fente d'arc métallique (16) lorsque le coulisseau de ligature (14) se trouve dans la position ouverte.

12. Boîtier orthodontique selon l'une quelconque des revendications 2 à 10, où l'élément élastique (20, 90, 124, 142) est en outre configuré pour fixer le coulisseau de ligature (14) dans au moins la position fermée.

13. Boîtier orthodontique selon la revendication 12, où le coulisseau de ligature comprend une fente de retenue (64) configurée pour coopérer avec l'élément élastique (20, 90, 124, 142) pour fixer le coulisseau de ligature (14) dans au moins la position fermée.

14. Boîtier orthodontique selon la revendication 13, où la fente de retenue (64) comprend une première partie en retrait (66), une première paroi de délimitation (68) adjacente à la première partie en retrait (66) qui définit une première extrémité de la fente de retenue, et une partie surélevée (70) adjacente à la première partie en retrait opposée à la première paroi de délimitation (68), une saillie (72) étant définie entre la première partie en retrait (66) et la partie surélevée (70), où l'élément élastique (20, 90, 124, 142) est en prise avec la première partie en retrait (66) lorsque le coulisseau de ligature (14) se trouve dans la position fermée.

15. Boîtier orthodontique selon la revendication 14, où la fente de retenue (64) comprend en outre une seconde partie en retrait (80) espacée de la première partie en retrait (66), et une seconde paroi de délimitation (78) adjacente à la seconde partie en retrait (80) qui définit une seconde extrémité de la fente de retenue, où la partie surélevée (70) est également adjacente à la seconde partie en retrait (80) opposée à la seconde paroi de délimitation (78), une saillie (84) étant définie entre la seconde partie en retrait (80) et la partie surélevée (70), et où l'élément élastique (20, 90, 124, 142) est en prise avec la seconde partie en retrait (80) lorsque le coulisseau de ligature (14) se trouve dans la position ouverte.
